# EUROPÄISCHE PATENTANMELDUNG

(11) **EP 1 237 033 A2**
(43) Veröffentlichungstag der Anmeldung: **04.09.2002**
(21) Anmeldenummer: 01130317.9
(22) Anmeldetag: 19.12.2001
(51) Int. Cl.: G02B 27/09, G02B 6/00

(54) **Herstellungsverfahren für einen Hohlmischstab und Hohlmischstab**

(30) Priorität: 28.02.2001 DE 10109591
(71) Anmelder: CARL ZEISS JENA GmbH, 07745 Jena (DE)
(72) Erfinder: Wagner, Bernhard, 07768 Kahla (DE)
(74) Vertreter: Grimm, Christian Jan Rainer

(57) **Zusammenfassung**

Bei einem Herstellungsverfahren für einen Hohlmischstab (1), der einen Hohlraum (6) mit viereckigem Querschnitt aufweist, werden folgenden Schritte ausgeführt:
Fertigen eines ersten und eines zweiten Seitenteiles (2, 3), das jeweils einen T-förmigen Querschnitt mit einem Quersteg (9) und einem davon vorspringenden Mittelsteg (10) aufweist, der eine dem Quersteg (9) abgewandte, reflektierende Endfläche (15) und im Querschnitt gesehen eine erste und eine zweite von der Endfläche (15) zum Quersteg (9) verlaufende Seitenfläche (11, 12) umfaßt, wobei zumindest beim ersten Seitenteil (2) die Endfläche (15) und die erste Seitenfläche (11) im Querschnitt gesehen unter einem Winkel (α) zusammenlaufen, der ungleich 90° ist,
Fertigen eines dritten und vierten Seitenteiles (4, 5) mit jeweils einer reflektierenden, ebenen Innenseite (16),
Zusammensetzen der vier Seitenteile (2, 3, 4, 5) derart, daß die Endflächen (15) des ersten und zweiten Seitenteiles (2, 3) einander zugewandt sind und daß die reflektierenden Innenseiten (16) des dritten und vierten Seitenteils (4, 5) im Querschnitt gesehen zueinander parallel verlaufen und mit ihren Randabschnitten auf den Seitenflächen (11, 12) der Mittelstege (10) aufliegen, so daß der Hohlraum (6) mit viereckigem Querschnitt begrenzt wird.

## Beschreibung

Die Erfindung bezieht sich auf ein Herstellungsverfahren für einen Hohlmischstab und auf einen Hohlmischstab mit vier Seitenteilen mit jeweils einer reflektierenden Innenseite, die jeweils eine Seite eines sich von einer Lichteintrittsfläche bis zu einer Lichtaustrittsfläche erstreckenden Hohlraumes mit viereckigem Querschnitt bildet.

Bei einem solchen Hohlmischstab kommt es für seine Eigenschaften sehr darauf an, daß die reflektierenden Innenseiten der vier Seitenteile so zusammengefügt sind, daß keinerlei Spalt zwischen ihnen gebildet ist, an dem es zu Lichtverlusten kommen würde. Insbesondere wenn die viereckige Querschnittsform des Hohlraumes nicht rechteckig oder quadratisch ist und somit seine Querschnittsseiten an zumindest einer Ecke unter einem Winkel zusammenlaufen, der ungleich 90° ist, ist die Herstellung eines solchen Hohlmischstabes sehr aufwendig.

Ausgehend hiervon ist es Aufgabe der Erfindung, ein Herstellungsverfahren für einen Hohlmischstab bereitzustellen, mit dem der Hohlmischstab einfach und genau hergestellt werden kann, auch wenn zwei Querschnittsseiten des Hohlraumes unter einem Winkel zusammenlaufen, der ungleich 90° ist. Femer soll noch ein Hohlmischstab der eingangs genannten Art so verbessert werden, daß er möglichst leicht herstellbar ist.

Erfindungsgemäß wird diese Aufgabe durch das Herstellungsverfahren für einen Hohlmischstab, der einen Hohlraum mit viereckigen Querschnitt aufweist, mit folgenden Schritten gelöst: Fertigen eines ersten und eines zweiten Seitenteiles, das jeweils einen T-förmigen Querschnitt mit einem Quersteg und einem davon vorspringenden Mittelsteg aufweist, der eine dem Quersteg abgewandte, reflektierende Endfläche und im Querschnitt gesehen eine erste und eine zweite von der Endfläche zum Quersteg verlaufende Seitenfläche umfaßt, wobei zumindest beim ersten Seitenteil die Endfläche und die erste Seitenfläche im Querschnitt gesehen unter einem Winkel zusammenlaufen, der ungleich 90° ist, Fertigen eines dritten und vierten Seitenteiles mit jeweils einer reflektierenden, ebenen Innenseite, Zusammensetzen der vier Seitenteile derart, daß die Endfläche des ersten und zweiten Seitenteiles einander zugewandt sind und daß die reflektierenden Innenseiten des dritten und vierten Seitenteiles im Querschnitt gesehen zueinander parallel verlaufen und mit ihren Randabschnitten auf den Seitenflächen der Querstege aufliegen, so daß der Hohlraum unter Ausbildung des viereckigen Querschnitts begrenzt wird. Durch dieses Verfahren muß lediglich bei einem Seitenteil mit T-förmigen Querschnitt die Endfläche schräg zu den Seitenflächen gebildet werden. Ein solches Abschrägen der Endfläche ist besonders einfach und genau durch Abschleifen eines T-förmigen Rohlings möglich, bei dem die Endfläche senkrecht zu den Seitenflächen verläuft. Ein solches Schleifen der Endfläche kann einerseits mit hoher Genauigkeit und Präzision durchgeführt werden. Andererseits kann man dieses Schleifen auch für eine Mehrzahl von Seitenteilen gleichzeitig durchführen, so daß auch eine Produktion hoher Stückzahlen mit unverändert hoher Genauigkeit durchführbar ist.

Um die gewünschte Ebenheit der Endflächen zu erhalten, werden bevorzugt die Endflächen nach dem Schleifen noch poliert.

Falls es sich beim dem Material des T-förmigen Rohlings um ein Material handelt, das keine ausreichenden reflektierenden Eigenschaften aufweist, kann die geschliffene und gegebenenfalls polierte Endfläche noch verspiegelt werden. Dies kann man beispielsweise durch Verspiegelung mit einer Silberschicht oder durch Aufbringen einer dielektrischen Verspiegelungsschicht realisieren. Je nach Art der Spiegelschicht kann gegebenenfalls noch eine Schutzschicht auf die Spiegelschicht aufgebracht werden.

Die Endfläche kann statt mittels Schleifen auch durch Fräsen gebildet werden, wobei bevorzugt die Endfläche noch poliert wird.

Die Seitenteile können aus Glas, Metall, Metallegierungen, Keramik oder Kunststoff gefertigt werden. Wenn Kunststoff verwendet wird, können das erste und zweite Seitenteil beispielsweise durch Spritzgießen gleich mit der abgeschrägten Endfläche gebildet werden. Die Endfläche kann bevorzugt noch nachbearbeitet werden, wenn die Ebenheit der Endfläche verbessert werden soll. Auch hier kann die Endfläche verspiegelt werden. Wenn Metall oder eine Metallegierung eingesetzt wird, kann die reflektierende Eigenschaft der Endfläche nur durch Polieren erzeugt werden. Auch bei diesen Materialien können die Seitenteile schon mit abgeschrägten Endflächen z. B. durch Gießverfahren gebildet werden. Alternativ ist natürlich auch ein Abschleifen oder Fräsen zur Abschrägung der Endfläche möglich.

In einer vorteilhaften Weiterbildung des erfindungsgemäßen Herstellungsverfahrens wird nach dem Zusammensetzen der vier Seitenteile ein Schrumpfschlauch über die vier Seitenteile übergezogen, der danach erwärmt wird. Aufgrund der Erwärmung schrumpft der Schlauch bzw. zieht sich zusammen und drückt dadurch die vier Seitenteile gegeneinander. Da der Schrumpfschlauch seine zusammengezogene Form nach dem Abkühlen beibehält, wird eine dauerhafte Fixierung der Seitenteile erreicht. Der Schrumpfschlauch kann im Mittelbereich des Hohlmischstabes in Längsrichtung gesehen angeordnet sein. Alternativ können auch zwei Schrumpfschläuche jeweils an den Endabschnitten des Hohlmischstabes in Längsrichtung gesehen vorgesehen werden. Die Verwendung des Schrumpfschlauches führt zu einer sehr einfachen und effektiven Art der Fixierung der vier Seitenteile relativ zueinander, die leicht und unproblematisch durchführbar ist. Insbesondere das Gegeneinanderdrücken der vier Seitenteile mittels des Schrumpfschlauches führt dazu, daß keinerlei Spalte zwischen den verspiegelten bzw. reflektierenden Innenseiten auftreten, so daß der Hohlmischstab mit der erforderlichen hohen Genauigkeit in einfacher Art und Weise gefertigt werden kann.

Der erfindungsgemäße Hohlmischstab mit den vier Seitenteilen mit jeweils einer ebenen, reflektierenden. Innenseite, die jeweils eine Seite eines sich von einer Lichteintrittsfläche bis zu einer Lichtaustrittsfläche erstreckenden Hohlraumes mit viereckigem Querschnitt bildet, ist dadurch gekennzeichnet, daß das erste und zweite Seitenteil jeweils einen T-förmigen Querschnitt mit einem Quersteg und einem davon vorspringenden Mittelsteg aufweist, dessen dem Quersteg abgewandte Endfläche die reflektierende Innenseite des Seitenteiles bildet und im Querschnitt gesehen eine erste und eine zweite von der Endfläche zum Quersteg verlaufende Seitenfläche umfaßt, wobei die reflektierenden Innenseiten des dritten und vierten Seitenteiles im Querschnitt gesehen zueinander parallel angeordnet sind und mit ihren Randabschnitten auf den Seitenflächen der Querstege aufliegen, wobei zumindest beim ersten Seitenteil die Endfläche und die erste Seitenfläche im Querschnitt gesehen unter einem Winkel zusammenlaufen, der ungleich 90° ist. Der erfindungsgemäße Hohlmischstab ist somit besonders leicht herstellbar, da zum Bilden einer Querschnittsform des Hohlraums, bei der in einer Ecke zwei Seiten unter einem Winkel zusammenlaufen, der ungleich 90° ist, z. B. lediglich die Endfläche des ersten Seitenteiles schräg abgeschliffen werden muß. Dies ist mit der erforderlichen hohen Genauigkeit leicht und einfach möglich. Das erste Seitenteil umfaßt somit bevorzugt eine schräg geschliffene Endfläche auf. Die Endfläche des Mittelsteges legt also den Winkel, unter dem die zwei Querschnittsseiten zusammenlaufen und der ungleich 90° ist, fest. Ferner liegen die Innenseiten des dritten und vierten Seitenteiles mit ihren Randabschnitten auf den Seitenflächen der Mittelstege auf, so daß die Mittelstege des ersten und zweiten Seitenteiles auch noch dazu dienen, den Abstand der reflektierenden Innenflächen des dritten und vierten Seitenteils vorzugeben und beizubehalten.

In einer vorteilhaften Weiterbildung des erfindungsgemäßen Hohlmischstabes werden die vier Seitenteile durch einen Schrumpfschlauch zusammengehalten. Die Verwendung eines Schrumpfschlauches zum Zusammenhalten und Fixeren der vier Seitenteile führt zu einer vereinfachten Herstellung des Hohlmischstabes, da der Schrumpfschlauch nur über die vier Seitenteile übergestülpt und danach erwärmt werden muß. Die Fixierung und Ausrichtung der vier Seitenteile erfolgt dann quasi automatisch, da sich der zusammenziehende Schrumpfschlauch an die Außenform der vier Seitenteile anpaßt und diese gegeneinander drückt. Bei diesem gegeneinander Drücken werden das dritte und vierte Seitenteil mit ihren reflektierenden Innenflächen auf den Seitenflächen der Mittelstege geführt und schließlich mit ihren Längsseiten gegen die Querstege gedrückt. Mit dem Schrumpfschlauch wird auch verhindert, daß der Hohlmischstab Spalte zwischen den reflektierenden Innenseiten aufweist, so daß die reflektierenden Flächen lichtdicht aneinanderliegen.

Vorteilhaft kann bei dem erfindungsgemäßen Hohlmischstab beim zweiten Seitenteil die Endfläche und die erste Seitenfläche im Querschnitt gesehen auch unter einem Winkel zusammenlaufen, der ungleich 90° ist. Dadurch wird es möglich, eine symmetrische Querschnittsform des Hohlraums, wie zum Beispiel einen trapezförmigen Querschnitt, zu verwirklichen. Man kann jedoch auch parallelogrammförmige Querschnittformen oder auch Querschnittsformen realisieren, bei denen die Querschnittseiten in den vier Ecken unter jeweils einem anderen Winkel zusammenlaufen.

Insbesondere kann bei dem erfindungsgemäßen Hohlmischstab das dritte und vierte Seitenteil jeweils einen I-förmigen Querschnitt aufweisen, wobei das dritte und vierte Seitenteil mit seinen Längsseiten an den Querstegen des ersten und zweiten Seitenteiles anliegt. Damit wird ein sehr kompakter Hohlmischstab verwirklicht, der stabil aufgebaut ist.

Der erfindungsgemäße Hohlmischstab kann insbesondere bei einer Optikvorrichtung zum Erzeugen und Projizieren eines Bildes verwendet werden. Die Optikvorrichtung enthält bevorzugt eine Lichtquelle, ein bilderzeugendes Element und eine Projektionsoptik, wobei der Hohlmischstab zwischen Lichtquelle und bilderzeugendem Element zwischengeschaltet ist. Das Licht der Lichtquelle wird über die Lichteintrittsfläche in den Hohlmischstab eingekoppelt und im Hohlmischstab bis zur Lichtaustrittsfläche geführt. Dabei werden die Lichtstrahlen, die auf die reflektierenden Innenseiten treffen, durch eine oder mehrerer Reflexionen bis zur Lichtaustrittsfläche geführt. Dies führt dazu, daß die Leuchtdichteverteilung in der Lichtaustrittsfläche im Vergleich zu der in der Lichteintrittsfläche gleichmäßiger ist, so daß in der Lichtaustrittsfläche ein möglichst gleichmäßig leuchtendes Feld erzeugt wird. Dieses leuchtende Feld wird zum Beispiel unter Zwischenschaltung einer Zwischenoptik auf das bildgebende Element abgebildet, um dieses möglichst gleichmäßig auszuleuchten. Das bildgebende Element wird aufgrund vorgegebener Bilddaten mittels einer Ansteuereinheit angesteuert, um das Bild zu erzeugen, das mittels der Projektionsoptik auf eine Projektionsfläche projiziert wird.

Die Erfindung wird nachfolgend anhand der Zeichnungen im Prinzip beispielshalber noch näher erläutert. Es zeigen:
- Fig. 1: eine perspektivische Ansicht des erfindungsgemäßen Hohlmischstabes;
- Fig. 2: eine Vorderansicht des in Fig. 1 gezeigten Hohlmischstabes;
- Fig. 3a - 3c: Herstellungsschritte zum Fertigen des T-förmigen Seitenteiles;
- Fig. 4: eine prinzipielle Draufsicht einer Optikvorrichtung mit dem erfindungsgemäßen Lichtmischstab;
- Fig. 5: eine Vorderansicht eines erfindungsgemäßen Lichtmischstabes gemäß einer weiteren Ausführungsform, und
- Fig. 6: eine Vorderansicht eines erfindungsgemäßen Lichtmischstabes gemäß einer noch weiteren Ausführungsform.

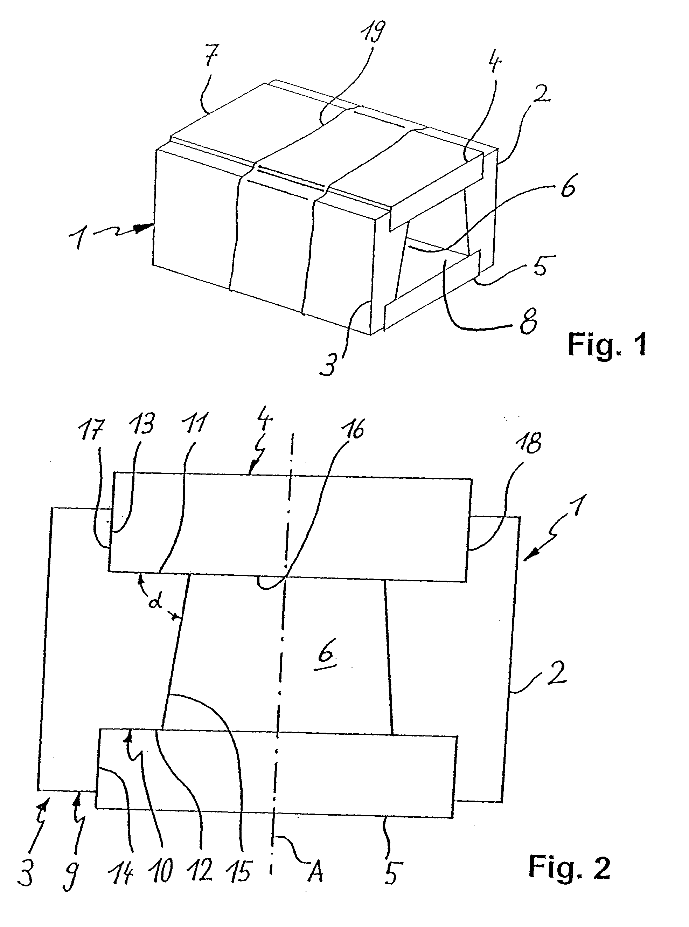

Wie aus Fig. 1 und 2 (in Fig. 2 ist der in Fig. 1 gezeigte Schrumpfschlauch 19 nicht eingezeichnet) ersichtlich ist, umfaßt der Hohlmischstab 1 vier Seitenteile 2, 3, 4 und 5, die einen Hohlraum 6 mit trapezförmigen Querschnitt bilden, wobei die in Längsrichtung des Hohlmischstabes 1 gesehen beide Enden offen sind und eine trapezförmige Lichteintrittsfläche 7 und eine trapezförmige Lichtaustrittsfläche 8 bilden.

Wie insbesondere aus Fig. 2 ersichtlich ist, ist der Hohlmischstab 1 bezüglich einer in einer Querschnittsebene liegenden Mittelachse A symmetrisch ausgebildet, so daß jeweils das erste und zweite Seitenteil 2, 3 und das dritte und vierte Seitenteil 4, 5 den gleichen Aufbau aufweisen. Im folgenden wird daher nur der Aufbau des zweiten und dritten Seitenteiles 3, 4 im Detail beschrieben.

Das zweite Seitenteil 3 weist einen T-förmigen Querschnitt mit einem Quersteg 9 und einem davon mittig vorspringen Mittelsteg 10 auf. Der Mittelsteg 10 erstreckt sich senkrecht zum Quersteg 9, so daß die Seitenflächen 11, 12 des Mittelstegs 10 senkrecht zu den Grundflächen 13, 14 des Querstegs 9 verlaufen. Die dem Quersteg 9 abgewandte ebene Endfläche 15 des Mittelstegs 10 verbindet die beiden Seitenflächen 11, 12 miteinander und läuft mit der Seitenfläche 11 unter einem Winkel α zusammen, der kleiner als 90° ist. In dem hier gezeigten Ausführungsbeispiel beträgt der Winkel 83°. Die Endfläche 15, die eine Seite des Hohlraums 6 begrenzt, ist reflektierend ausgebildet. Bei der hier beschriebenen Ausführungsform ist das zweite Seitenteil 3 aus Glas gebildet und die Endfläche 15 ist mit einer Spiegelschicht aus beispielsweise Silber oder mit einer dielektrischen Spiegelschicht versehen.

Das dritte Seitenteil 4 weist einen I-förmigen Querschnitt mit einer reflektierenden Innenseite 16 auf. Auch das dritte Seitenteil 4 ist aus Glas gebildet und die reflektierende Innenseite 16 ist wiederum verspiegelt, zum Beispiel mit einer Silberschicht oder einer dielektrischen Spiegelschicht. Die Form des dritten Seitenteiles 4 ist so gewählt, daß ihre Längsseiten 17, 18 senkrecht zur reflektierenden Innenseite 16 verlaufen.

Das erste und zweite Seitenteil 2, 3 sind mit einem vorbestimmten Abstand voneinander angeordnet, wobei die beiden Endflächen 15 einander zugewandt sind, und bilden das rechte und linke Seitenteil des Hohlmischstabes 1. Das obere und untere Seitenteil des Hohlmischstabes 1 wird durch das dritte und vierte Seitenteil 4, 5 verwirklicht, wobei das dritte Seitenteil 4 mit seinen beiden seitlichen Randbereichen auf den Seitenflächen 11 der Mittelstege 10 aufliegt und das vierte Seitenteil 5 mit seinen beiden seitlichen Randbereichen auf den Seitenflächen 12 der Mittelstege 10 aufliegt, so daß die reflektierenden Innenseiten 16 des dritten und vierten Seitenteiles 4, 5 im Querschnitt gesehen zueinander parallel verlaufen. Die vier Seitenteile 2 bis 5 werden durch einen über den Hohlmischstab 1 übergestülpten Schrumpfschlauch 19 (der nur in Fig. 1 eingezeichnet ist) gegeneinander gedrückt und fixiert. Dabei werden einerseits die Grundflächen 13, 14 der Querstege 9 des ersten und zweiten Seitenteiles 2, 3 gegen die Längsseiten 17, 18 des dritten und vierten Seitenteiles 4, 5 gedrückt und andererseits werden die reflektierenden Innenseiten 16 des dritten und vierten Seitenteils 4, 5 in ihren im Querschnitt gesehenen seitlichen Randbereichen bzw. -abschnitten gegen die Seitenflächen 11, 12 der Mittelstege 10 des ersten und zweiten Seitenteils 2, 3 gedrückt. Dadurch wird ein sehr kompakter und stabiler Hohlmischstab 1 bereitgestellt, der leicht zu fertigen und zu montieren ist und der den Hohlraum 6 mit einer viereckigen Querschnittsform aufweist, bei der die Querschnittsseiten in den vier Ecken jeweils unter einem Winkel zusammenlaufen, der ungleich 90° ist.

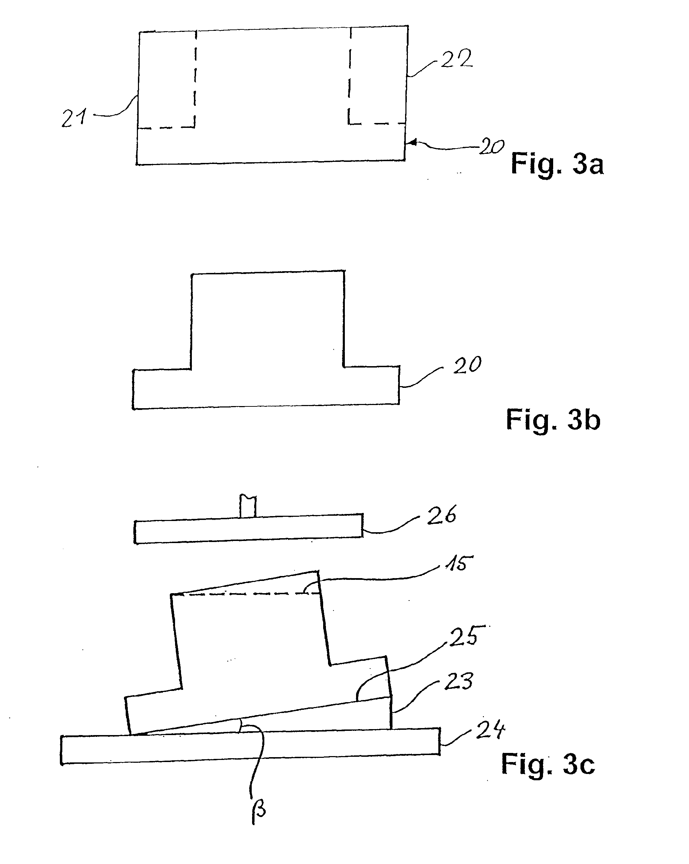

Im folgenden wird ein erfindungsgemäßes Verfahren zum Herstellen des in Fig. 1 und 2 gezeigten Hohlmischstabes 1 beschrieben. Das T-förmige Seitenteil 2, 3 wird aus einem Glasrohling 20 mit I-förmigen Querschnitt (Fig. 3a) gefertigt, dessen Länge entsprechend der Länge des Hohlmischstabes 1 gewählt ist. Von diesem Glasrohling 20 werden die Seitenbereiche 21, 22 entfernt (beispielsweise durch Schleifen), so daß der in Fig. 3b gezeigte T-förmige Querschnitt gebildet ist. Danach wird dieser T-förmige Glasrohling auf einem Keil 23 einer Trägerplatte 24 befestigt, wobei die Keilfläche 25, auf der der T-förmige Glasrohling 20 aufliegt, gegenüber der Trägerplatte 24 um den Winkel β geneigt ist. Der Winkel β ist dabei so gewählt, daß er gleich dem Winkel 90° - α entspricht. In dem hier beschriebenen Beispiel beträgt der Winkel β somit 7°. Die dem Quersteg des T-förmigen Glasrohlings 20 abgewandte Endfläche des Mittelstegs 10 wird dann mittels einer Schleifscheibe 26 so lange geschliffen, bis die Endfläche 15 (ist in Fig. 3c als Strichlinie eingezeichnet) mit der gewünschten Neigung gegenüber den Seitenflächen des Mittelstegs gebildet ist. Diese Endfläche 15 wird dann noch poliert und verspiegelt. Auf diese Weise kann sehr einfach jeder gewünschte Neigungswinkel der Endfläche 15 relativ zu den Seitenflächen 11, 12 des Mittelstegs 10 gebildet werden. Damit ist das erste und zweite Seitenteil 2, 3 fertiggestellt. Die Trägerplatte 24 und der Keil 23 können auch ein Werkzeug sein.

Das dritte und vierte Seitenteil 4, 5 wird auch aus einem I-förmigen Rohling gebildet, wobei dessen Innenseite, die im zusammengebauten Zustand des Hohlmischstabes 1 den Hohlraum 6 begrenzt, poliert und verspiegelt wird.

Die so gebildeten vier Seitenteile 2 bis 5 werden dann gemäß dem in Fig. 1 und 2 gezeigten Aufbau zusammengesetzt. Danach wird der Schrumpfschlauch 19 übergestülpt, dessen Innenquerschnitt größer ist als der Außenquerschnitt des Hohlmischstabes 1, so daß das Überstülpen leicht möglich ist. Dann wird der Schrumpfschlauch 19 erwärmt, so daß er sich zusammenzieht und dadurch die vier Seitenteile 2 bis 5 aneinander drückt und fixiert. Der Schrumpfschlauch 19 behält diese zusammengezogene Form auch nach dem Abkühlen bei, so daß die Seitenteile 2 bis 5 dauerhaft gegeneinander gedrückt werden und somit auch dauerhaft fixiert sind.

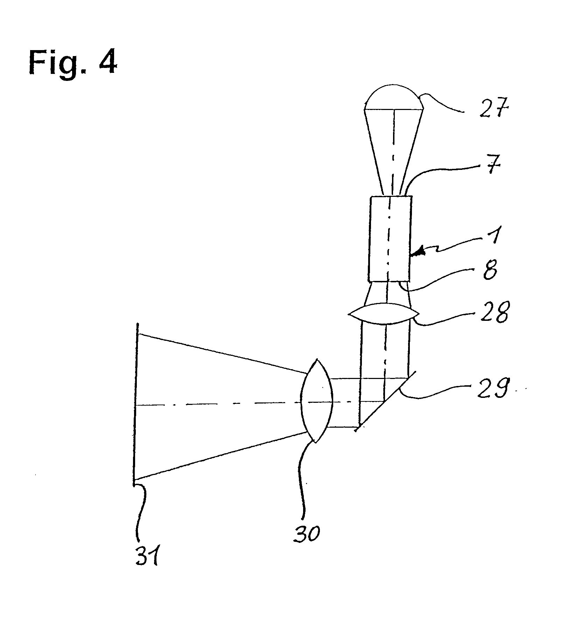

In Fig. 4 ist die Verwendung des erfindungsgemäßen Hohlmischstabes 1 in einer Optikvorrichtung zum Erzeugen und Projizieren eines Bildes gezeigt. Diese Optikvorrichtung umfaßt eine Lichtquelle 27 und den dieser nachgeschalteten Hohlmischstab 1, in dessen der Lichtquelle 27 zugewandten Lichteintrittsfläche 7 Licht der Lichtquelle 1 eingekoppelt wird, das dann im Hohlmischstab 1 bis zur Lichtaustrittsfläche 8 geleitet wird. Die Optikvorrichtung enthält weiterhin eine der Lichtaustrittsfläche 8 des Hohlmischstabes 1 nachgeschaltete Zwischenoptik 28, mit der das aus der Lichtaustrittsfläche 8 austretende Licht auf ein bildgebendes Element 29 so gerichtet wird, daß dieses möglichst gleichmäßig ausgeleuchtet wird. Als bildgebendes Element 29 kann beispielsweise eine Kippspiegelmatrix oder eine LCD-Matrix verwendet werden. Das bildgebende Element 29 wird mittels einer Ansteuereinheit (nicht gezeigt) auf der Basis vorgegebener Bilddaten angesteuert, so daß das gewünschte Bild eingestellt werden kann, das dann mittels einer Projektionsoptik 30 der Optikvorrichtung auf einer Projektionsfläche 31 projiziert wird.

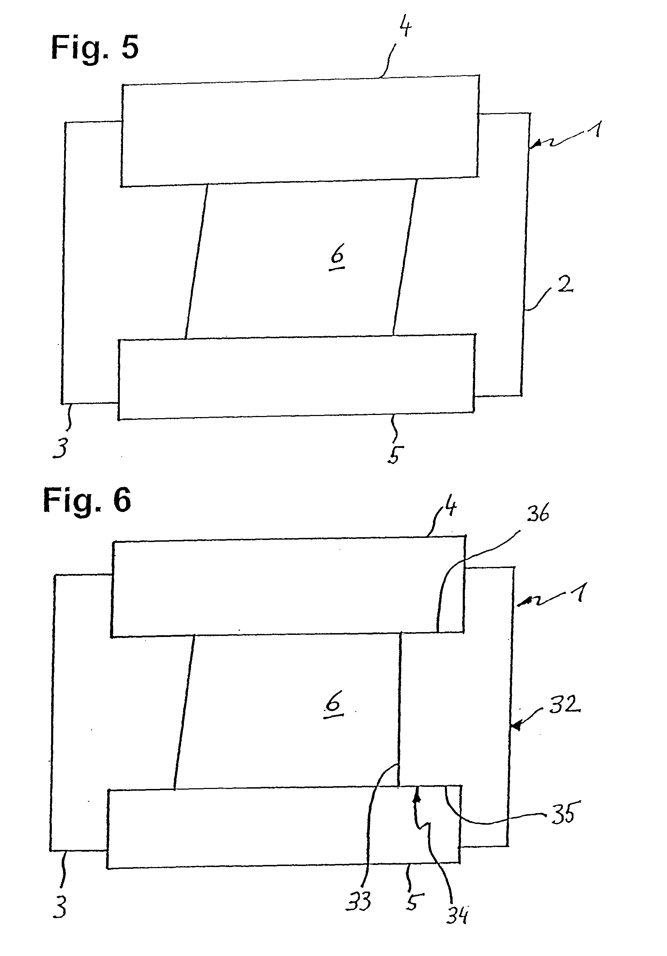

In Fig. 5 ist eine weitere Ausführungsform des Hohlmischstabes 1 zu sehen. Diese Ausführungsform unterscheidet sich von der in Fig. 2 gezeigten Ausführungsform darin, daß das erste Seitenteil 2 so um 180° gedreht ist, daß der Hohlraum 6 einen Parallelogramm-Querschnitt aufweist. Bei dieser Ausführungsform und auch bei der in Fig. 1 und 2 gezeigten Ausführungsform des Hohlmischstabes 1 weist das erste und zweite Seitenteil 2, 3 die gleich Querschnittsform auf, so daß vorteilhaft nur eine Art von T-förmigen Seitenteilen mit schräger Endfläche 15 hergestellt werden muß. Es ist jedoch auch möglich, beim ersten und zweiten Seitenteil 2, 3 jeweils die Neigung der Endfläche 15 unterschiedlich groß zu wählen. In diesem Fall müssen dann zwei verschiedene Arten von Seitenteilen hergestellt werden.

In Fig. 6 ist eine noch weitere Ausführungsform gezeigt, bei der im Vergleich zu der in Fig. 1 und 2 gezeigten Ausführungsform statt dem ersten Seitenteil 2 ein T-förmiges Seitenteil 32 vorgesehen ist, dessen Endfläche 33 des Mittelstegs 34 senkrecht zu den Seitenflächen 35, 36 des Mittelstegs 34 verläuft.

## Patentansprüche

1. Herstellungsverfahren für einen Hohlmischstab (1), der einen Hohlraum (6) mit viereckigem Querschnitt aufweist, mit folgenden Schritten:
Fertigen eines ersten und eines zweiten Seitenteiles (2, 3), das jeweils einen T-förmigen Querschnitt mit einem Quersteg (9) und einem davon vorspringenden Mittelsteg (10) aufweist, der eine dem Quersteg (9) abgewandte, reflektierende Endfläche (15) und im Querschnitt gesehen eine erste und eine zweite von der Endfläche (15) zum Quersteg (9) verlaufende Seitenfläche (11, 12) umfaßt, wobei zumindest beim ersten Seitenteil (2) die Endfläche (15) und die erste Seitenfläche (11) im Querschnitt gesehen unter einem Winkel (α) zusammenlaufen, der ungleich 90° ist,
Fertigen eines dritten und vierten Seitenteiles (4, 5) mit jeweils einer reflektierenden, ebenen Innenseite (16),
Zusammensetzen der vier Seitenteile (2, 3, 4, 5) derart, daß die Endflächen (15) des ersten und zweiten Seitenteiles (2, 3) einander zugewandt sind und daß die reflektierenden Innenseiten (16) des dritten und vierten Seitenteils (4, 5) im Querschnitt gesehen zueinander parallel verlaufen und mit ihren Randabschnitten auf den Seitenflächen (11, 12) der Mittelstege (10) aufliegen, so daß der Hohlraum (6) unter Ausbildung des viereckigen Querschnitts begrenzt wird.

2. Herstellungsverfahren nach Anspruch 1, wobei beim Fertigen des ersten Seitenteiles (2) zuerst ein Rohling (20) mit einem T-förmigen Querschnitt hergestellt wird, bei dem die im Querschnitt gesehen dem Quersteg abgewandte Endfläche des Mittelstegs unter einem rechten Winkel mit der Seitenfläche zusammenläuft, und danach die Endfläche so abgeschliffen wird, daß der gewünschte Winkel (α) zwischen der Endfläche (15) und der ersten Seitenfläche (11) gebildet wird.

3. Herstellungsverfahren nach Anspruch 1 oder 2, wobei nach dem Zusammensetzen der vier Seitenteile (2, 3, 4, 5) ein Schrumpfschlauch (19) über die vier Seitenteile (2, 3, 4, 5) übergezogen wird, der dann durch Erwärmen geschrumpft wird, so daß die vier Seitenteile (2, 3, 4 5) aneinander gedrückt und fixiert werden.

4. Herstellungsverfahren nach einem der Ansprüche 1 bis 3, bei dem vor dem Zusammensetzen die Innenseiten (16) und die Endflächen (15) verspiegelt werden, so daß sie reflektierende Eigenschaften aufweisen.

5. Hohlmischstab mit vier Seitenteilen (2, 3, 4, 5) mit jeweils einer reflektierenden Innenseite (15, 16), die jeweils eine Seite eines sich von einer Lichteintrittsfläche (7) bis zu einer Lichtaustrittsfläche (8) erstreckenden Hohlraums (6) mit viereckigem Querschnitt bildet, **dadurch gekennzeichnet, daß** das erste und zweite Seitenteil (2, 3) jeweils einen T-förmigen Querschnitt mit einem Quersteg (9) und einem davon vorspringenden Mittelsteg (10) aufweist, dessen dem Quersteg (9) abgewandte Endfläche (15) die reflektierende Innenseite des Seitenteiles (2, 3) bildet und der im Querschnitt gesehen eine erste und eine zweite von der Endfläche (15) zum Quersteg (9) verlaufende Seitenfläche (11, 12) umfaßt, wobei die reflektierenden Innenseiten (16) des dritten und vierten Seitenteiles (4, 5) im Querschnitt gesehen zueinander parallel angeordnet sind und mit ihren Randabschnitten auf den Seitenflächen (11, 12) der Mittelstege (10) aufliegen, wobei zumindest beim ersten Seitenteil (2) die Endfläche (15) und die erste Seitenfläche (11) im Querschnitt gesehen unter einem Winkel (α) zusammenlaufen, der ungleich 90° ist.

6. Hohlmischstab nach Anspruch 5, **dadurch gekennzeichnet, daß** die vier Seitenteile (2, 3, 4, 5) durch einen Schrumpfschlauch (19) zusammengehalten werden.

7. Hohlmischstab nach Anspruch 5 oder 6, **dadurch gekennzeichnet, daß** beim zweiten Seitenteil (3) die Endfläche (15) und die erste Seitenfläche im Querschnitt gesehen unter einem Winkel zusammenlaufen, der ungleich 90° ist.

8. Hohlmischstab nach einem der Ansprüche 5 bis 7, **dadurch gekennzeichnet, daß** das dritte und vierte Seitenteil (4, 5) jeweils einen I-förmigen Querschnitt aufweist, wobei das dritte und vierte Seitenteil (4, 5) mit seinen Längsseiten (17, 18) an den Querstegen (9) des ersten und zweiten Seitenteiles (2, 3) anliegen.
